# FASCICULE DE BREVET EUROPEEN

(11) **EP 1 326 374 B1**
(45) Date de publication et mention de la délivrance du brevet: **23.01.2008**
(21) Numéro de dépôt: 02293187.7
(22) Date de dépôt: 20.12.2002
(51) Int. Cl.: H04L 12/24

(54) **Système de gestion de réseaux basé sur l'analyse des tendances**
Netzwerkverwaltungssystem basierend auf Tendenzanalyse
Network management system based on trend analysis

(30) Priorité: 03.01.2002 FR 0200037
(43) Date de publication de la demande: 09.07.2003
(73) Titulaire: Alcatel Lucent, 75008 Paris (FR)
(72) Inventeur: Betge-Brezetz, Stéphane, 75015 Paris (FR); Martinot, Olivier, 91210 Draveil (FR); Marilly, Emmanuel, 92160 Antony (FR)
(74) Mandataire: Chaffraix, Sylvain

(56) Documents cités:
- EP-A- 0 661 847
- WO-A-00/19664
- WO-A-01/17169
- US-A- 6 147 975
- US-B1- 6 320 585

## Description

La présente invention est relative à un système de gestion de réseaux de transport, notamment de réseaux de télécommunication.
Au sein de ces réseaux de transport, de nombreux flux de données sont transmis. Le trafic résultant des ces flux de données a un comportement susceptible d'évolutions importantes avec le temps.
Aussi, il est possible qu'à un instant donné, le trafic devienne incompatible avec les ressources disponibles sur le réseau de télécommunication, ou avec un contrat de qualité de service ou SLA (*Service Level Agreement*) sur lequel l'opérateur du réseau s'est engagé vis-à-vis d'un client ou d'un fournisseur de service
C'est typiquement le cas lorsque le débit sur un lien entre deux noeuds du réseau devient supérieur au débit admissible sur ce lien. Il en résulte un engorgement et une perte de performance des flux de données.

Pour palier ce problème, les réseaux de transport sont généralement associés à des systèmes de gestion de réseau, dont un des buts est de surveiller le trafic en certains points jugés clés du réseau, au moyen de sondes de mesure. Ces sondes de mesure transmettent des données au système de gestion de réseau, soit au moyen d'alarmes, soit en réponse à des requêtes de mesures provenant du système de gestion de réseau lui-même.

Selon les systèmes de gestion de réseau, les données acquises sont ensuite présentées à un opérateur humain, idéalement après un traitement informatique simple pour les rendre plus lisibles. L'opérateur a alors pour tâche de surveiller cet ensemble de données acquises afin de détecter une anomalie (panne d'un élément du réseau, engorgement d'un lien, etc.). Ensuite, l'opérateur doit décider de l'action corrective appropriée (remplacement d'un élément de réseau, redéfinition des schémas de routage, etc.)

Toutefois, une telle façon de faire s'avère insuffisante.
D'une part, la taille et la complexité grandissante des réseaux de transport (notamment de télécommunication) et la multiplicité des services à déployer sur ces réseaux tendent à faire croître le nombre de données acquises que l'opérateur doit surveiller. Il en ressort une difficulté grandissante pour l'opérateur de réaliser sa tâche de façon efficace.
D'autre part, seul l'état du réseau de transport à un instant donné est pris en compte. L'opérateur n'a aucun moyen simple d'anticiper les problèmes et doit donc leur faire face uniquement au moment où ils se présentent. A ce moment-là, les conséquences de ces problèmes sont, bien entendu, plus importantes que s'ils avaient été anticipés. Cela peut notamment déboucher sur la violation d'un SLA (*Service Level Agreement*), c'est-à-dire du contrat qui lie l'opérateur du réseau de transport et un tiers (client ou fournisseur de services). Une telle violation peut avoir pour conséquence le paiement d'une pénalité au tiers lésé.

Le brevet américain US 6 320 585 décrit un système d'analyse de tendance pour faire de la visualisation de ces tendances. Mais il ne s'agit aucunement d'un système de gestion de réseau à proprement parler, et les tendances ainsi calculées et visualisées ne sont pas directement exploitables par l'opérateur du réseau de télécommunication.

Le but de l'invention est de palier ce problème posé par les solutions de l'état de la technique. Pour ce faire, le système de gestion de réseau selon l'invention calcule, de façon automatique, des tendances à partir des données acquises et détermine si ces tendances satisfont des conditions qui leur ont été associées.

Plus précisément, l'invention a pour objet un système de gestion de réseau, comportant un module d'acquisition de données provenant du réseau de transport géré. Ce système comporte :
■ un module de calcul de tendances apte à déterminer la tendance d'un ensemble de données acquises, et
■ un module de calcul de satisfaction, apte à déterminer la satisfaction de conditions associées à ces tendances, à déterminer la date à laquelle une condition commence à ne plus être satisfaite,

Il se caractérise en ce qu'il comporte en outre un module de déclenchement d'actions pour déclencher des actions correctrices associées auxdites conditions, lorsque le module de calcul de satisfaction de conditions a déterminé qu'une condition n'était pas satisfaite, ces actions correctrices étant transmises aux équipements du réseau de transport géré et/ou à un module de gestion de trafic.

Les conditions peuvent par exemple être formées à partir de seuils et d'opérateurs de comparaison liant les seuils aux tendances.
Le système de gestion de réseau peut de surcroît comporter une base de définition de tendance contenant les paramètres de l'association entre les données acquises et les tendances et une base de définition de conditions définissant l'association entre les conditions et les tendances.

Ainsi, l'opérateur peut ne se voir présenter que les tendances qui ne satisfont pas les conditions qu'on leur a associées. L'opérateur peut alors anticiper un problème avant que celui-ci n'apparaisse. Il peut donc entreprendre des actions correctives, de sorte que ce problème potentiel ne survienne pas.

Selon une mise en oeuvre de l'invention, le système de gestion de réseau possède de surcroît des moyens pour classifier les situations de non-satisfaction de condition, en fonction de ces dates.

Ainsi, l'opérateur peut ne plus intervenir sur un certain nombre d'actions correctives qui peuvent être gérées automatiquement par le système de gestion de réseau.

L'invention a pour second objet un système de gestion de service, comportant un système de gestion de réseau tel que décrit.

L'invention et ses avantages seront expliqués plus clairement dans la description de mises en oeuvre qui va suivre, en liaison avec les figures annexées.
La figure 1 représente un réseau de télécommunication et son interaction avec un système de gestion de réseau selon l'invention.
La figure 2 détaille, de façon schématique, le système de gestion de réseau selon l'invention.
La figure 3 illustre un exemple de calcul de satisfaction de condition.

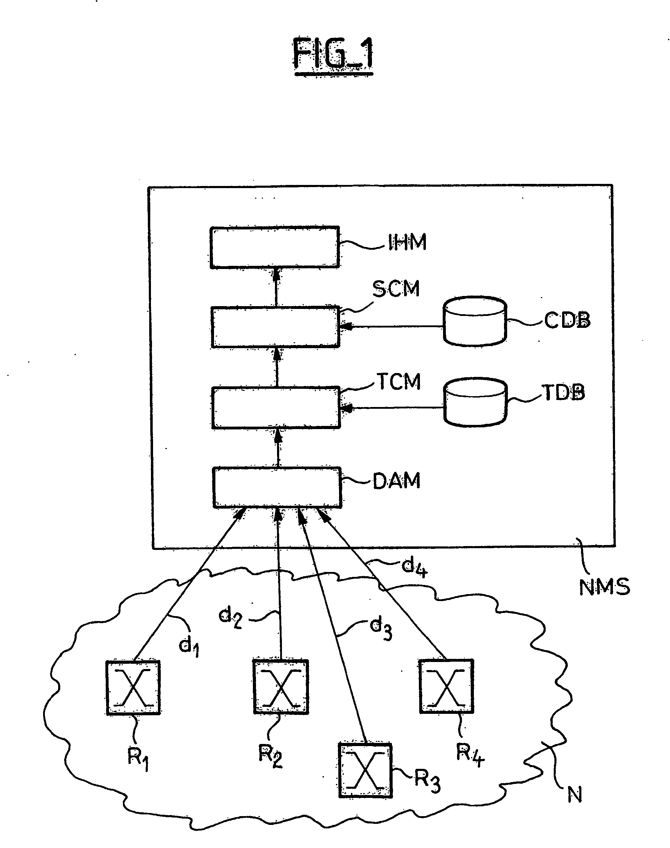

Sur la figure 1, le réseau de télécommunication N comporte des éléments de réseau, ici des routeurs, R₁, R₂, R₃, R₄.
Ce réseau de télécommunication est associé à un système de gestion de réseaux NMS.
Les éléments de réseau transmettent des données, d₁, d₂, d₃, d₄ à un module d'acquisition de données DAM, faisant partie du système de gestion de réseau NMS. Ces données acquises peuvent provenir d'alarmes ou bien de mesures.
Les alarmes sont notifiées par un équipement de réseau ayant détecté un problème (déficience, dépassement d'un seuil par une valeur, etc.)
Les mesures sont des valeurs transmises en dehors d'une situation de problème. Elles peuvent correspondre à un modèle « *push* », c'est à dire être transmises à la demande du système de gestion de réseau NMS. Ces transmissions peuvent être périodiques.
Elles peuvent aussi correspondre à un modèle « *pull* ». Dans ce cas, les mesures sont disponibles dans des bases de données localisées sur les équipements de réseau. Ces bases de données sont habituellement désignées sous l'acronyme MIB, pour *Management Information Base*, en anglais. Le système de gestion réseau NMS peut alors lire ces mesures en accédant à ces bases de données MIB.
Ces données acquises sont transmises ensuite, par exemple périodiquement, à un module de calcul de tendances TCM.

Ce module d'analyse de tendances TCM est apte à calculer la tendance de chaque ou d'une partie des données acquises. Pour ce faire, il peut utiliser une base de définition de tendances TDB, qui contient les définitions des tendances à calculer.
La définition d'une tendance peut être caractérisée par des paramètres de l'association entre des données acquises et des tendances. Plus précisément, il peut s'agir, pour chaque tendance, de la désignation des valeurs acquises sur laquelle elle porte, la méthode de calcul de la tendance (régression linéaire, non linéaire...) et des paramètres de cette méthode.

Les tendances ainsi calculées sont ensuite transmises à un module de calcul de satisfaction SCM. Son rôle est de vérifier que les tendances qui lui sont transmises par le module de calcul de tendances TCM, satisfont un ensemble de conditions.
Ces conditions sont définies dans une base de définition de conditions CDB, qui permet d'associer les tendances à des conditions. Ces conditions peuvent être caractérisées par un opérateur de comparaison et, éventuellement par une valeur. Elles peuvent être exprimées sous la forme : « Tendance 1 > valeur 1 »
Cette valeur peut être une valeur de seuil, fixé préalablement, ou bien une valeur d'historique, par exemple déterminée par un instant précédent de l'évolution de la (ou des) donnée(s) acquise(s).

Ces conditions peuvent mettre en jeu plusieurs tendances, qui peuvent alors être reliées :
- soit par un opérateur de comparaison. On peut ainsi exprimer, par exemple, des conditions de la forme « Tendance1 > Tendance2 ».
- Soit par un opérateur logique, afin de permettre d'exprimer des comparaisons de la forme : « Tendance1 > valeur1 ET Tendance2 > valeur2 »

Ce module de calcul de satisfaction de condition CSM vérifie, par exemple périodiquement, que l'ensemble des conditions sont satisfaites. S'il détecte qu'une ou plusieurs tendances ne satisfont pas une condition qui leur est associé, l'opérateur peut en être avertie au moyen d'une interface homme-machine IHM. Dans les autres cas, les données acquises ou les tendances peuvent ne pas être présentée à l'opérateur, ceci afin de limiter le nombre d'information que l'opérateur doit traiter.
Ainsi, l'opérateur peut se voir présenter des informations sur l'évolution prévisible du réseau géré. Il peut donc anticiper cette évolution en mettant en oeuvre des actions correctives permettant soit de minimiser, soit de supprimer les effets négatifs de cette évolution.
Ce module de calcul de satisfaction de condition CSM peut aussi déterminer la date à laquelle une tendance commence à ne plus satisfaire une condition.
Ainsi, selon un mode de réalisation de l'invention, les non-satisfactions de condition peuvent être classifiées, notamment en fonction de ces dates. Il est alors aisé, notamment par l'opérateur, de traiter les problèmes suivant la proximité de leur occurrence.

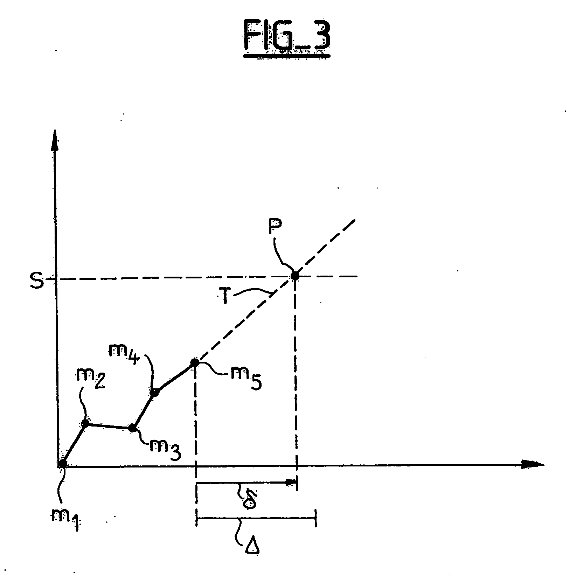

La figure 3 illustre un exemple de calcul de satisfaction de condition. L'axe des abscisses représente le temps, et l'axe des ordonnées représente la valeur de la valeur considérée.
Les points m₁, m₂, m₃, m₄, m₅, sont des données acquises par le module d'acquisition de données DAM. La courbe T représente la tendance calculée par le module de calcul de tendances TCM.
Un seuil S a été placé pour former une condition « T<S » définie dans la base de définition des conditions CDB et dont la satisfaction est vérifiée par le module de calcul de satisfaction de conditions SCM.
Ce dernier est à même de déterminer que cette tendance T va dépasser la condition « inférieur au seuil S » en un point P.
Il peut alors présenter à l'opérateur, via l'interface homme-machine IHM, une information lui indiquant ce dépassement. Il peut aussi lui être présenté la date du point P auquel la tendance T dépasse le seuil S, ou plutôt le délai δ séparant cette date, de la date courante (c'est-à-dire, ici, la date de la dernière donnée acquise m₅).

Selon une mise en oeuvre de l'invention, on peut classifier les informations fournies à l'opérateur, en fonction de ce délai δ. Les conditions non satisfaites sont classées par ordre de délai δ croissant. Ceci permet de mettre en avant à l'opérateur, les problèmes les plus urgents à traiter.

Selon un mode de réalisation, il est possible d'associer un seuil d'alarme Δ à la condition « T<S ». Le dépassement de ce nouveau seuil Δ par le délai δ déclenche une alarme. Ce ne peut être qu'en cas de déclenchement d'une telle alarme, que des informations sont transmises à l'opérateur, ou bien cette alarme va déclencher une mise en forme particulière des informations (par exemple, une couleur spécifique, etc.)

Selon un mode de réalisation particulier de l'invention, on associe aux tendances calculées par le module de calcul de tendances TCM, des valeurs de fiabilité. Cette fiabilité permet de caractériser la prédiction effectuée par le calcul de tendance. Deux types de fiabilités peuvent en fait être calculés :
■ Une fiabilité a priori, par exemple basée sur un coefficient de corrélation d'une régression linéaire,
■ Une fiabilité a posteriori, par exemple basée sur un calcul de différence entre la valeur prédite et la valeur réellement acquise, et cela à différents horizons temporels.

La valeur de fiabilité se répercute bien évidemment sur les résultats du module de calcul de satisfaction SCM, et donc sur les informations présentées à l'opérateur. Par exemple, chaque information relative à une non-satisfaction d'une condition peut être affichée en association avec une valeur de fiabilité.

Il peut aussi être prévu, selon un mode de réalisation de l'invention, que l'interface homme-machine permette des interactions plus évoluées avec les différents modules du système de gestion de réseau NMS.
Elle peut notamment permettre à l'opérateur d'effectuer des requêtes en prédiction. Par exemple, le système peut fournir à la demande, la date à laquelle une tendance atteint une valeur fixée par l'opérateur. Inversement, il peut fournir la valeur atteinte par une tendance à une date déterminée par cet opérateur.

Cette interface homme-machine (ou bien une autre) peut aussi être connectée directement à la base de définition des tendances TDB et/ou à la base de définition des conditions CDB, afin de permettre la création, la modification et la suppression de tendances et/ou de conditions.
Alternativement, ces bases peuvent être enrichies au moyen de simples fichiers, par exemple.

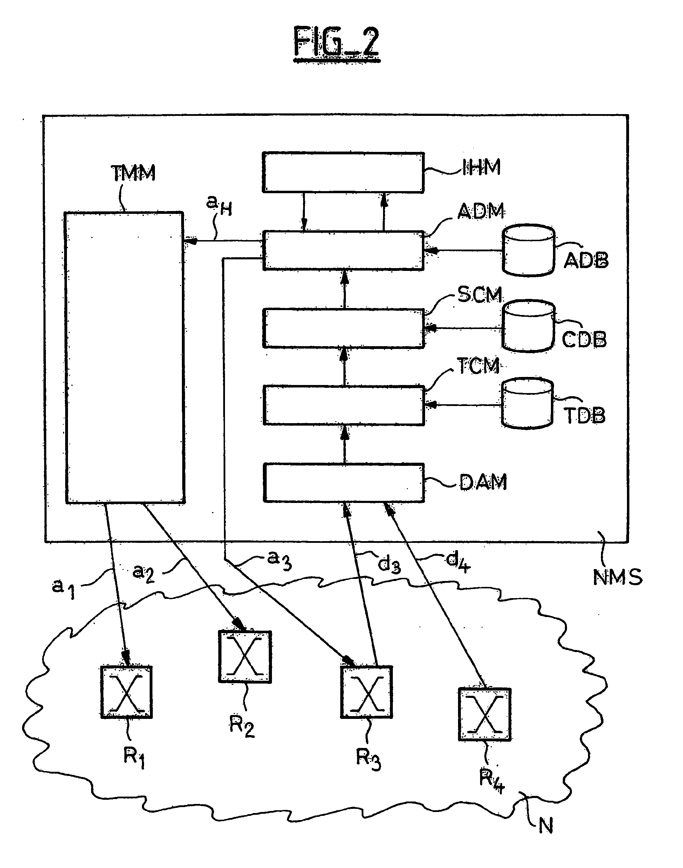

La figure 2 illustre une seconde mise en oeuvre de l'invention.
Le module de gestion de réseau NMS est associé à un réseau N composé de 4 équipements de réseau R₁, R₂, R₃, R₄.
Comme dans la mise en oeuvre illustrée par la figure 1, ce module de gestion de réseau NMS comporte un module d'acquisition de données DAM, un module de calcul de tendances TCM associé à une base de définition de tendances TDB et un module de calcul de satisfaction SCM associé à une base de définition de conditions CDB, l'ensemble de ces modules et de ces bases étant identiques à ceux décrit précédemment.
Le module d'acquisition de données acquière des données d₃, d₄ ainsi que décrit précédemment.

Selon cette mise en oeuvre, le module de calcul de satisfaction communique avec un module de déclenchement d'actions ADM.
Le rôle de ce dernier est de déclencher automatiquement des actions correctrices lorsque le module de calcul de satisfaction SCM détecte qu'une condition n'est pas satisfaite.
Cette action correctrice peut nécessiter une action de confirmation, ou éventuellement de paramétrage, de l'opérateur par le biais de l'interface homme-machine IHM.
L'action correctrice est ensuite transmise soit aux équipements de réseau, a₃, soit à un module de gestion de trafic TMM, aₕ, qui peut être conforme aux modules de gestion de trafic tels que connus de l'état de la technique.
Ce module de gestion de trafic est, classiquement, apte à déterminer les actions bas-niveaux a₁, a₂ correspondant à l'action correctrice aₕ qui lui est soumis. Ces actions bas-niveau a₁, a₂, a₃ sont transmises à certains éléments de réseau, R₁, R₂ et R₃ sur la figure 2, afin d'éviter le problème qui a été pré-détecté par le module d'analyse de tendances TAM.
Ces actions a₁, a₂, a₃ peuvent par exemple viser à
- Modifier la route d'un tunnel MPLS (*Multi-Protocol Label Switching*),
- Modifier la taille d'un tunnel MPLS,
- Réaliser de la répartition de charge (ou « *Load balancing* » en anglais), etc.

Ainsi, l'opérateur peut ne plus avoir à intervenir pour certaines opérations correctives et se consacrer aux problèmes les plus complexes. Pour des catégories intermédiaires de problèmes, l'action de l'opérateur peut se limiter à la confirmation et/ou au paramétrage d'actions correctives proposées automatiquement par le système de gestion de réseau NSM.
Dans tous les cas, il en résulte un gain substantiel en efficacité pour l'opérateur.

Il peut aussi être prévu qu'une action correctrice consiste à alerter le service de planification en charge du réseau. Ceci permet de mettre en oeuvre des actions correctrices à plus long terme consistant à redimensionner le réseau, par exemple en ajoutant des équipements de réseau, ou en changeant le type de connexion physique entre les routeurs.

Lorsque le module de déclenchement d'actions ADM a plusieurs non-satisfactions de conditions à gérer simultanément, il peut faire un tri en se basant sur les délais δ restant avant les non-satisfactions des conditions, ainsi que décrit précédement. Plus particulièrement, les actions peuvent n'être déclenchées que si une alarme est levée, c'est-à-dire si le délai δ est inférieur à un seuil Δ.

## Revendications

1. Système de gestion de réseau, comportant un module d'acquisition de données (DAM) provenant du réseau de transport géré, comportant un module de calcul de tendances (TCM) apte à déterminer la tendance d'un ensemble de données acquises, et un module de calcul de satisfaction (SCM), apte à déterminer la satisfaction de conditions associées auxdites tendances, à déterminer la date à laquelle une condition commence à ne plus être satisfaite, **caractérisé en ce qu'**il comporte en outre un module de déclenchement d'actions (ADM) pour déclencher des actions correctrices associées auxdites conditions, lorsque ledit module de calcul de satisfaction de conditions (SCM) a déterminé qu'une condition n'était pas satisfaite, et pour transmettre lesdites actions correctrices aux équipements dudit réseau de transport géré et/ou à un module de gestion de trafic (TMM).

2. Système de gestion de réseau selon la revendication précédente, dans lequel lesdites conditions sont formées à partir de seuils et d'opérateurs de comparaison liant lesdits seuils aux dites tendances.

3. Système de gestion de réseau selon l'une des revendications précédentes, comportant de surcroît une base de définition de tendance (TDB) contenant les paramètres de l'association entre les données acquises et lesdites tendances et une base de définition de conditions (CDB) définissant l'association entre les conditions et les tendances.

4. Système de gestion de réseau selon l'une des revendications précédentes, possédant de surcroît des moyens pour classifier les situations de non-satisfaction de condition, en fonction desdites dates.

5. Système de gestion de réseau selon l'une des revendications précédentes, dans lequel une valeur de fiabilité est associée auxdites tendances.

6. Système de gestion de réseau selon l'une des revendications précédentes, comportant de surcroît une interface homme-machine (IHM) permettant la réalisation de requêtes de prédiction.

7. Système de gestion de réseau selon l'une des revendications précédentes, dans lequel ledit module de déclenchement d'actions est apte à transmettre lesdites actions correctives à un service de planification en charge dudit réseau de transport géré.

8. Système de gestion de service, comportant un système de gestion de réseau selon l'une des revendications précédentes.

## Claims

1. A network management system comprising a data acquisition module (DAM) coming from the carrier network managed, **characterised in that** it comprises a trend calculation module (TCM) able to determine the trend of a set of acquired data, and a satisfaction calculation module (SCM) able to determine the satisfaction of conditions associated with said trends, to determine the time at which a condition commences no longer to be satisfied (ADM), **characterised in that** it further comprises an action triggering module for triggering corrective actions associated with said conditions when said condition satisfaction calculation module (SCM) has determined that a condition has not been satisfied, and for transmitting said corrective actions to the equipment of said transport network managed and/or to a traffic management module (TMM).

2. A network management system according to the preceding claim, in which said conditions are formed from thresholds and comparison operators linking said thresholds to said trends.

3. A network management system according to one of the preceding claims, comprising in addition a trend definition base (TDB) containing the parameters of the association between the data acquired and said trends and a condition definition base (CDB) defining the association between the conditions and the trends.

4. A network management system according to one of the preceding claims, having in addition means for classifying the condition non-satisfaction situations, according to said times.

5. A network management system according to one of the preceding claims, in which a reliability value is associated with said trends,

6. A network management system according to one of the preceding claims, comprising in addition a man-machine interface (IHM) making it possible to produce prediction requests.

7. A network management system according to one of the proceeding claims, in which said action triggering module is able to transmit said corrective actions to a planning service in charge of said carrier network managed.

8. A service management system, comprising a network management system according to one of the proceeding claims,

## Patentansprüche

1. Netzwerkverwailmigssystem, das ein Modul zur Erfassung von Daten (DAM) einschließt, die vom verwalteten Transportnetz herkommen, wobei dieses System ein Modul zur Berechnung von Tendenzen (TCM) einschließt, das im Stande ist, die Tendenz einer erfassten Datenmenge zu ermitteln, und ein Modul zur Einhaltungsberechnung (SCM), das im Stande ist, die Einhaltung von mit diesen Tendenzen verknüpften Bedingungen zu ermitteln, das Datum zu ermitteln, an dem eine Bedingung beginnt nicht mehr erfüllt zu werden, **dadurch gekennzeichnet, dass** es außerdem ein Modul zur Auslösung von Maßnahmen. (ADM) einschließt, um mit diesen Bedingungen verknüpfte Korrekturmaßnahmen auszulösen, wenn dieses Modul zur Berechnung der Einhaltung von Bedingungen (SCM) ermittelt hat, dass eine Bedingung nicht erfüllt wird, und zur Übermittlung dieser Korrekumaßnahmen an die Ausrüstungen dieses verwalteten Transportnetzes und/oder an ein Modul zur Verkehrsverwaltung (TMM).

2. Netzworkverwaltungssystem gemäß dem vorstehenden Anspruch, bei dem diese Bedingungen gebildet werden ausgehend von Schwellen und Vergleichsoperatoren, welche diese Schwellen mit diesen Tendenzen verbinden.

3. Netzwerkverwaliungssystem gemäß einem der vorstehenden Ansprüche, das überdies eine Basis zur Tendenzdefinition (TDB) einschließt, welche die Parameter für die Verbindung zwischen den erfassten Daten und diesen Tendenzen enthält, und eine Basis für die Bedingungsdefinition (CDB), welche die Verbindung zwischen den Bedingungen und den Tendenzen festlegt.

4. Netzwerkverwaltungssystem gemäß einem der vorstehenden Ansprüche, das außerdem Mittel besitzt, um die Situationen mit Nichterfüllung der Bedingungen in Abhängigkeit von deren Datum zu klassifizieren.

5. Netzwerkverwaltungsstem gemäß einem der vorstehenden Ansprüche, bei dem man einen Zuverlässigkeitswert mit diesen Tendenzen verknüpft.

6. Netzwerkverwaltungssystem gemäß einem der vorstehenden Ansprüche, das außerdem eine Schnittstelle Mensch-Maschine (IHM) einschließt, die die Durchführung von Anforderungen in Sachen Vorhersage ermöglicht.

7. Netzwerkverwaltungssystem gemäß einem der vorstehenden Ansprüche, bei dem dieses Modul zur Auslösung von Maßnahmen im Stande ist, diese Korrekturmaßnahmen an einen Planungsdienst; der für dieses verwaltete Transportnetz zuständig ist, zu übertragen.

8. Dienstverwaltungssystem, das ein Netzwerkverwaltungssystem gemäß einem der vorstehenden Ansprüche einschließt.
